Europäisches Patentamt

European Patent Office

Office européen des brevets

(19)

(11) Publication number: **0 052 431**
**B1**

# (12) EUROPEAN PATENT SPECIFICATION

(45) Date of publication of patent specification: **13.06.84**

(51) Int. Cl.³: **C 04 B 7/44**

(21) Application number: **81304901.2**

(22) Date of filing: **20.10.81**

(54) Cement burning plant.

(30) Priority: **17.11.80 GB 8036837**

(43) Date of publication of application:
**26.05.82 Bulletin 82/21**

(45) Publication of the grant of the patent:
**13.06.84 Bulletin 84/24**

(84) Designated Contracting States:
**BE DE FR GB IT LU NL**

(56) References cited:
**DE - A - 2 061 980**
**DE - A - 2 923 448**
**FR - A - 2 279 043**
**US - A - 3 603 568**
**US - A - 3 758 266**
**US - A - 3 964 922**

(73) Proprietor: **F.L. Smidth & Co. A/S**
**77 Vigerslev Allé**
**DK-2500 Valby Copenhagen (DK)**

(72) Inventor: **Knudsen, Hans Brun**
**77 Vigerslev Alle**
**DK-2500 Valby Copenhagen (DK)**

(74) Representative: **Jackson, Peter Arthur et al,**
**GILL JENNINGS & EVERY 53-64 Chancery Lane**
**London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a plant for burning cement clinker (hereinafter referred to as of the kind described) and comprising:

(a) a preheater with an inlet and outlet for heating gas and an inlet and an outlet for pulverulent cement raw material;

(b) a suspension calciner with inlets for fuel, combustion air and preheated raw material, an outlet for combustion gas connected to the heating gas inlet of the preheater and an outlet for calcined material communicating with a material inlet of

(c) a sintering furnace incorporating a cylindrical member rotatable about an axis which is slightly inclined to the horizontal and providing a sintering drum, an inlet for fuel and combustion air, an outlet at one end of the drum for combustion gas communicating with the heating gas inlet of the preheater and an outlet at the lower end of the drum for the sintered product connected to a material inlet of

(d) an air cooler for cooling the sintered product with an air outlet connected to both the air inlet of the sintering furnace and the air inlet of the suspension calciner.

Plants of this kind are known from US—A—3,203,681 and GB—A—1,434,091 according to which a short rotary kiln is used as sintering furnace.

The characteristic feature of this kind of plant is that the heat treatment of the cement raw material necessary for the manufacture of cement clinker takes place in three separate zones of the plant corresponding to the three heat treatment phases: preheating substantially to calcining temperature; calcining; and final heat treatment comprising heating to sintering temperature and sintering.

By this are achieved improved heat economy and improved control of the phases of the process as compared with earlier plants in which the entire heat treatment took place in a long rotary kiln.

The rotary kiln is however not an ideal apparatus, the essential drawback being the relatively inefficient heat transfer during the process of heating the material from calcining to sintering temperature. Because of this the machinery dimensions are necessarily large, resulting in high initial apparatus cost, a substantial heat loss and a considerable thermal inertia leading to long starting up periods and also control problems.

Another disadvantage of the rotary kiln as a sintering reactor is the rather limited number of variable process parameters available. As a result it is difficult at the same time to optimise both the heating process and the crucial sintering process where the formation of the clinker minerals takes place.

Over the years numerous proposals have been made for sintering furnaces not presenting the inherent disadvantages of the rotary kiln, cf. e.g. US—A—2,776,132 and 3,013,786 (sintering in fluid bed); and US—A—2,489,211, GB—A—959,446 and US—A—3,603,568 (sintering in suspended state). However, essentially due to the sticky nature of cement raw material at sintering temperature, none of these solutions have functioned satisfactorily, which accounts for the fact that up to now the final heat treatment is still in practice carried out in a rotary kiln.

It is the object of the invention to provide an apparatus of the kind described in which the final heat treatment can be performed in small compact machinery under easy control, while minimizing the heat loss and problems caused by the sticky nature of the sintering material.

According to the invention the object is achieved by an apparatus of the kind described which is characterised in that the sintering furnace comprises a suspension inlet duct provided with a material inlet and having a first end connected to the air outlet of the cooler and a second end leading to a suspension inlet at the upper end of the drum in a plane substantially tangential to the inner circumferential surface of the drum whereby, in use, material in suspension is introduced into the upper end of the drum with a tangential velocity component and thereby separated from the suspension; the fuel inlet or inlets leading into the suspension inlet of the drum and/or into the suspension inlet duct.

In this apparatus the final heat treatment can be performed in a particularly advantageous way. Thus the calcined material is introduced in the suspension inlet duct and suspended in the hot exit air from the cooler. Since fuel is introduced, heat is transferred from the burning fuel to the suspended calcined material providing a heating substantially to sintering temperature being far more rapid and efficient than in a rotary kiln.

The critical phase during which the material heated to the sintering temperature is separated from the suspension mainly takes place in the upper part of the sintering drum, which acts as a horizontal cyclone because the tangential discharge of the suspension causes a rapid helical movement of the suspension in the sintering drum.

In use the sintering drum is kept slowly rotating so that the inherent tendency of the material to stick together and form cakings will lead to no problems because the sintering drum will act not only as a separator but at the same time in a manner known per se as a rotating agglomeration drum.

On the contrary the sticky character of the material will advantageously cause a preliminary agglomeration of the fine material during the separation, which promotes separation efficiency as well as a good rate of agglomeration.

Even the tendency to form cakings will be advantageous, because it will lead to lining-protecting crust formation in the drum, as in the hot zones of an ordinary rotary kiln.

The final agglomeration and the sintering proper during which the clinker minerals are formed will mainly take place while the separated material is passing through the rotating sintering drum i.e. under conditions which can be controlled independently of the heating and separating process, e.g. by varying the speed of rotation of the sintering drum.

The improved heat transfer permits a radical reduction of the apparatus dimensions with consequent advantages, and the use of low grade fuel which is not suitable for traditional sintering due to an insufficiently high flame temperature.

In cases of particular tendency to formation of cakings due to the raw material composition it is advantageous to provide a fuel inlet at the suspension inlet of the sintering drum.

In this case, the material is not heated quite to the sintering temperature in the suspension inlet duct, even though the suspension inlet duct may be provided with a fuel inlet, but merely to an intermediate temperature at which the material has not yet become so sticky that it causes problems, the last heating taking place inside the upper part of the sintering drum.

By this risk of formation of cakings outside the sintering drum is virtually eliminated. In addition a very efficient heating to the sintering temperature is achieved in the upper end of the sintering drum, where heat is transferred both while the material in the upper end of the drum still in a suspended state, and while the material, during the separation, rotates along the inner surface of the upper part of the drum in an annular material layer presenting a by far larger heat transferring surface layer than in a traditional rotary kiln.

When a tendency to formation of cakings is less pronounced a single fuel inlet may be arranged in the suspension inlet duct to provide heating to the sintering temperature in the suspension inlet duct.

The sintered material discharged from the drum may be fed directly to a clinker cooler of known type e.g. a grate cooler or a rotary drum cooler, but it may also be subjected to an after sintering in a small rotating drum before it is directed to the clinker cooler.

The advantages of carrying out the sintering at two stages is that the material separation phase and part of the sintering phase are kept apart so that the latter may take place in a drum having a particularly small radius, i.e. having particularly small heat loss.

In one construction, the sintering drum is provided with a constriction member situated at a distance from the material inlet constituting approximately one third of the total length of the sintering drum.

This constriction member, which is preferably provided as a thickening of the lining in the sintering drum, and preferably has a inner diameter constituting 40—80% of the inner diameter of the sintering drum, provides a corresponding division of the sintering drum into separating and sintering sections. Highly effective material separation is thus ensured.

The preheater is preferably a multistage cyclone suspension preheater through which the material is passed countercurrently to the heating gas and repeatedly suspended in and separated from the gas.

As the temperature of the exit gas from the sintering drum is rather high, about 1400°C as compared with about 1100°C for the normal temperature of exit gas from a traditional rotary kiln, it is, for reasons of heat economy, expedient not to pass this exit gas directly to the preheater, but indirectly through the suspension calciner, e.g. via the calciner air inlet.

In order to avoid possible condensation problems in the combustion gas outlet duct of the sintering drum, it may be advantageous to procure a quenching of the exit gas to the calcining temperature of about 850°C. This may be achieved by a construction in which the sintering furnace combustion gas outlet duct is provided with an inlet for preheated material. The temperature of the exit gas from the sintering furnace is thus immediately quenched upon contact with the uncalcined material which becomes suspended in the gas. The preheated material is then introduced into the calciner suspended in the exit gas from the sintering furnace.

If a less abrupt quenching of the exit gas is desired this may be obtained by another arrangement in which the sintering furnace combustion gas duct is provided with an inlet for calcined material and a cyclone separator defining a heat exchange unit for calcined material, the gas outlet of the cyclone being connected to the air inlet of the suspension calciner, and the material outlet of the cyclone being connected to the material inlet of the suspension inlet duct. Such heat exchange unit is advantageous because the temperature of the material introduced in the suspension inlet duct is thereby increased; consequently less firing in the sintering furnace is necessary and this again means smaller dimensions of the sintering furnace.

The outlet for the sintered product may simply be an opening in the lower part of a fixed end wall at the lower end of the sintering drum communicating with the cooler via an ordinary hood which may further be provided with outlets for hot exit air from the cooler communicating with the air inlets of the suspension calciner and the first end of the suspension inlet duct, respectively.

Only minor amounts of hot exit gas from the cooler will enter the sintering drum via this opening when the area of the opening is small. This small amount of false air entering into the drum will be advantageous in providing a precooling of the sintered product before it is directed to the cooler.

The combustion gas outlet duct may be arranged in either end of the sintering drum. When arranged in the lower end a preferred embodiment of the invention is characterized in that the outlet for the sintered product, the lowest part of the sintering drum and the combustion gas outlet duct provide the connection between the air outlet of the cooler and the air inlet of the suspension calciner.

By this is achieved firstly very uncomplicated apparatus design, secondly advantageous precooling of the sintered product, and thirdly advantageous quenching of the combustion gas at the combustion gas exit.

Besides the above mentioned preferred embodiments of plants with multistage cyclones arranged in one string it can, particularly in case of plants with large production capacity, be advantageous in a manner known per se, cf. e.g. GB—A—1,434,091 to provide the preheater as a two string multistage cyclone suspension preheater, each string being provided with separate material and heating gas inlets and outlets, the heating gas inlet of the calciner/sintering furnace string being connected to the combustion gas outlet of the calciner/sintering furnace, respectively.

In one construction incorporating this two string version, the sintering furnace combustion gas duct is provided with an inlet for calcined material and a cyclone separator defining a heat exchange unit for calcined material, a gas outlet of the cyclone separator being connected to the heating gas inlet of the sintering furnace string. This provides an advantageous quenching of the exit gas from the sintering furnace similar to the quenching described above.

In its simplest form the suspension inlet duct of the drum may merely be a pipe directed with a tangential component towards the inner side of the cylinder wall of the drum, but an advantageous embodiment is characterized in that the tangential relationship between the second end of the suspension inlet duct and the upper end of the sintering drum is provided via a stationary cylindrical member which is coaxial with, and smaller in diameter than, the sintering drum and which provides a spiral flow chamber with a tangential suspension inlet and an axial suspension outlet communicating with the sintering drum.

The advantage of using this stationary spiral flow chamber is that it is possible to reduce the area of the fixed end wall at the upper part of the sintering drum and let the peripheral part of the end wall be fixed to the sintering drum. In this way problems of procuring an airtight connection between movable and stationary apparatus parts are reduced.

The gas velocity in the suspension inlet duct is desirably at a level so high that the suspended particles and the gas have almost the same velocity. Further, it is very desirable that the gas undergoes no violent changes of direction. The number of collisons between particles and walls are thus kept to a minimum, and as a result the caking problem will be negligible.

The fuel may be introduced above, below or at the same height as the material.

In order further to eliminate the risk of cakings it is possible, in a manner known per se, to draw in a gas along the walls of the suspension inlet duct.

If additional fuel is added at the material inlet of the sintering drum inlets may be provided for secondary air at the same place.

The suspended material will thus be heated to the sintering temperature and separated from the suspension in a few seconds. The retention time of the separated material during which the proper sintering and formation of clinker minerals take place will typically be 7—12 min.

Typical sintering drum dimensions are D: 4 m., L: 12—20 m., the rotational speed of the drum is typically 1—4 r.p.m. A typical inclination of the drum will be 3° which is barely perceptible in the accompanying drawings. The degree of filling in the drum is typically 15—20 per cent. The production capacity of such a plant is 2000 tons/24 hrs.

Some examples of plants constructed in accordance with the invention are illustrated diagrammatically in the accompanying drawings, in which:—

Figures 1 to 11 show various plants having a one-string preheater;

Figures 12 to 13 show various plants having a multi-string preheater;

Figures 14 to 17 show variations of the connection between the suspension inlet duct and the sintering drum; and

Figures 18 to 23 show variations of the lower end of the sintering drum.

In the figures the same reference numbers are used for identical plant parts.

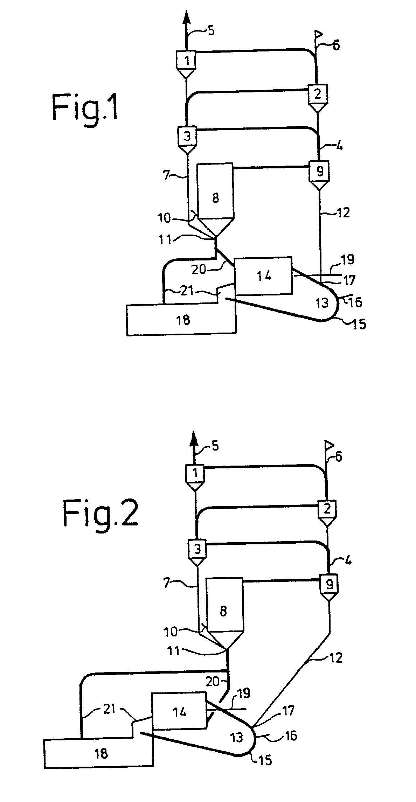

The apparatus shown in Figures 1 to 11 includes:

A suspension preheater comprising cyclones 1, 2, and 3, an inlet 4 and an outlet 5 for heating gas and an inlet 6 and an outlet 7 for pulverulent cement raw material; a suspension claciner with a calcination chamber 8 provided with a separating cyclone 9, an inlet 10 for fuel, an inlet 11 for combustion air and preheated raw material, and an outlet 12 for calcined material from the separating cyclone 9; a sintering furnace 13 comprising a sintering drum 14 rotatable around an axis which is slightly inclined to the horizontal downwards from right to left, a suspension inlet duct 15 provided with inlets 16 and 17 for fuel and material, respectively, and having a first end connected to an air cooler 18 and a second end connected to the upper end of the drum 14, the drum 14 being provided with an inlet 19 for fuel, and provided with a gas outlet duct 20 axially connected to one end of the drum 14; and an air cooler 18 for cooling the sintered material having an air outlet 21 connected to both the suspension inlet duct 15 of the sintering furnace 13 and the air inlet 11 of the calciner. Both fuel inlets 16 and 19 may be present or one of them may be omitted.

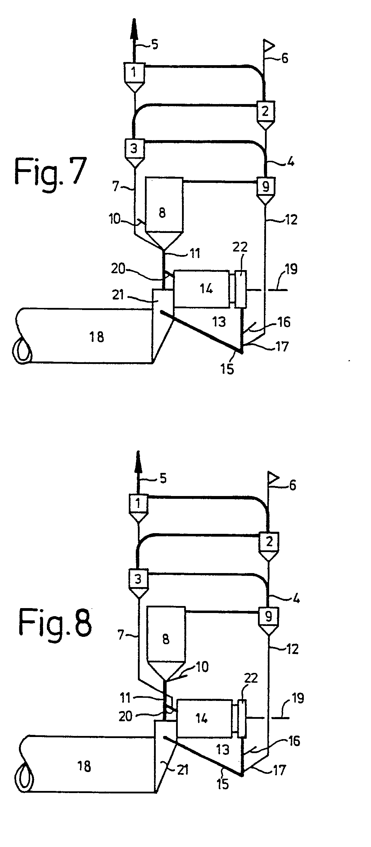

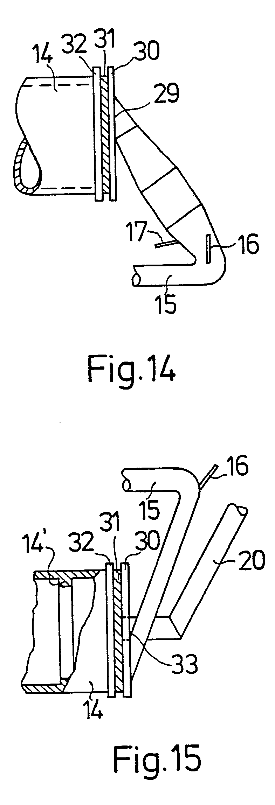

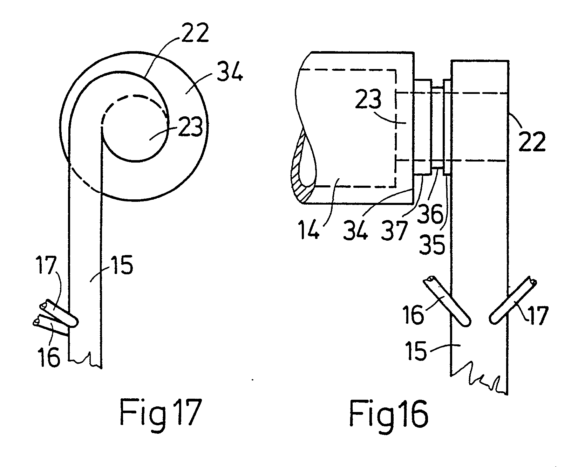

Figures 1 to 6 and 10 to 11 the suspension inlet duct 15 is directly tangentially towards the inner side of the cylindrical drum wall as shown in more detail in Figures 14 and 15, whereas in Figures 7 to 9 the suspension inlet duct 15 is designed with a spiral flow chamber 22 as shown in more detail in Figures 16 and 17.

In both cases the suspension will perform a rapid helical movement in the upper part of the drum 14. However, when using the spiral flow chamber with axial introduction of the suspension into the sintering drum through a central inlet 23 the problems of creating an air-tight connection between movable and stationary parts of the sintering furnace 13 are reduced.

Figures 1 and 2 show the cooler 18 as a grate cooler which may be provided with a (not shown) duct for excess hot cooling air. The remaining figures illustrate the use of a rotary drum cooler. Of course the grate cooler in Figures 1 and 2 can be replaced by a rotary drum cooler and vice versa.

As the mode of operation and advantages of the various examples have been explained in detail above, the following will just concentrate on the further features which distinguish the apparatus shown in Figures 1 to 11 from one another.

In the apparatus of Figures 1 and 2 preheated material is passed via the duct 7 directly to the calciner. In Figure 1, the combustion gas outlet duct of the drum 14 is provided at the lower end of the drum 14, but in Figure 2 the duct 20 is provided in the upper end of the drum 14 beside the inlet from the suspension inlet duct 15.

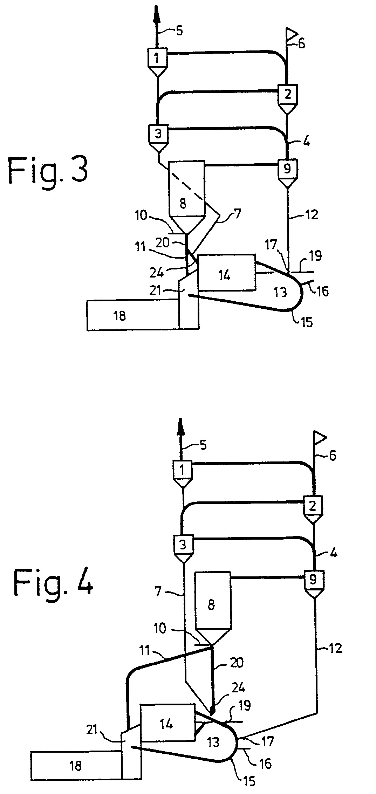

In the apparatus in Figures 3 and 4 preheated material is passed via the duct 7 to a material inlet 24 in the outlet duct 20 of the drum 14. The duct 20 is connected to the lower end of the drum 14 in Figure 3 and to the upper end of the drum 14 in Figure 4.

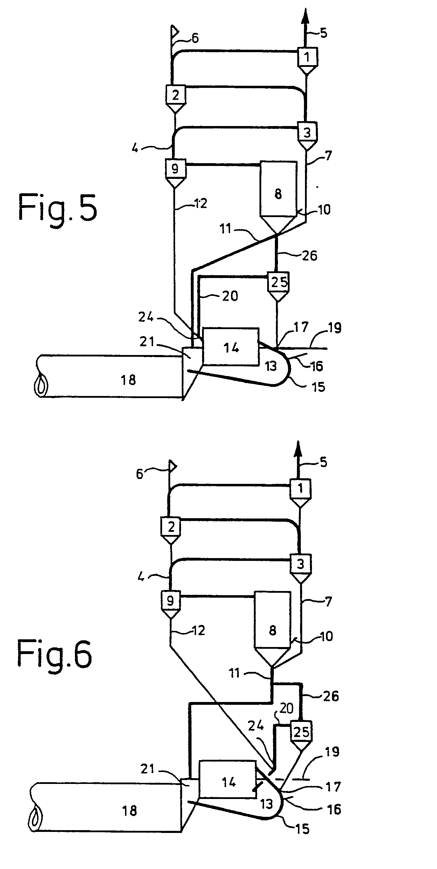

In the apparatus in Figures 5 and 6 preheated material is passed via the duct 7 directly to the calciner, whereas calcined material is passed via the duct 12 to a heat exchange unit for calcined material before it is introduced into the suspension inlet duct. Via the duct 12 the calcined material is passed to the material inlet 24 in the duct 20, which in Figure 5 is connected to the lower and in Figure 6 to the upper end of the drum 14. The duct 20 is provided with a cyclone separator 25 with a gas outlet 26 being connected to the gas inlet 11 of the calciner, and an outlet for heated material connected to the material inlet 17.

The apparatus in Figures 7, 8 and 9 correspond completely to the apparatus of Figures 1, 3 and 5, respectively, except for the suspension inlet duct 15 being constructed as explained with reference to Figures 14 and 15.

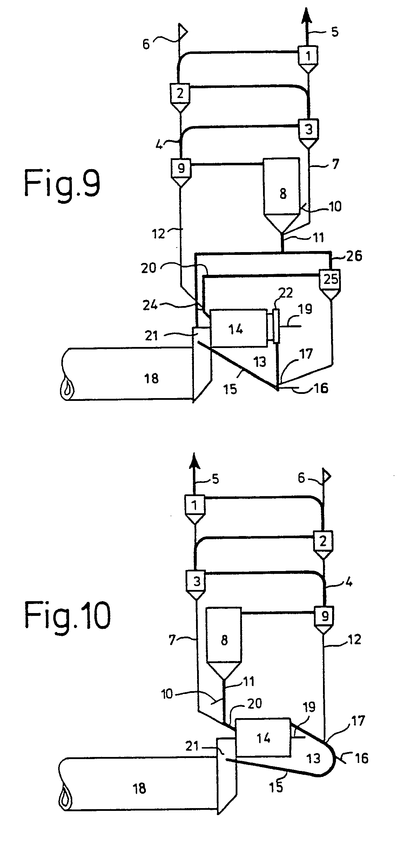

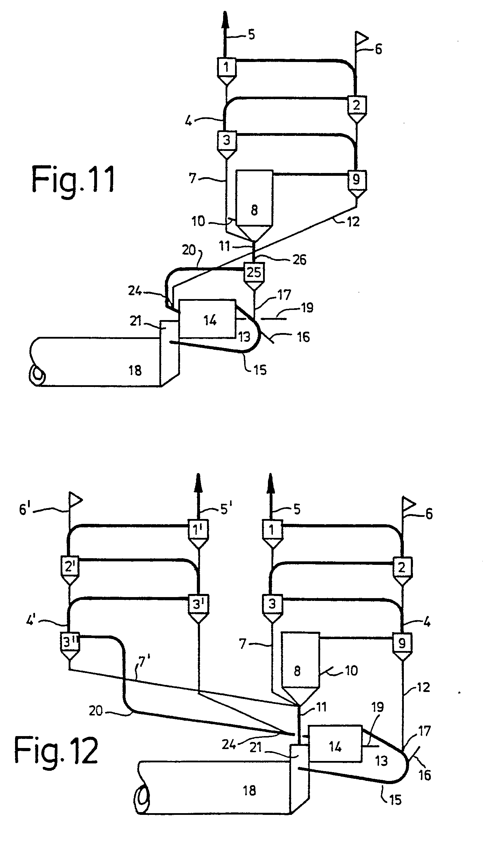

Figures 10 and 11 show two embodiments corresponding to the apparatus shown in Figures 3 and 5, respectively. However, the hot exit air for the calciner is drawn through an opening for the clinker leaving the sintering drum 18 where it provides a precooling of the clinker and quenching of the exit gas from the sintering drum. The gas air mixture then passes to the calciner via the duct 20, directly according to Figure 10, or via a heat exchange unit for calcined material according to Figure 11.

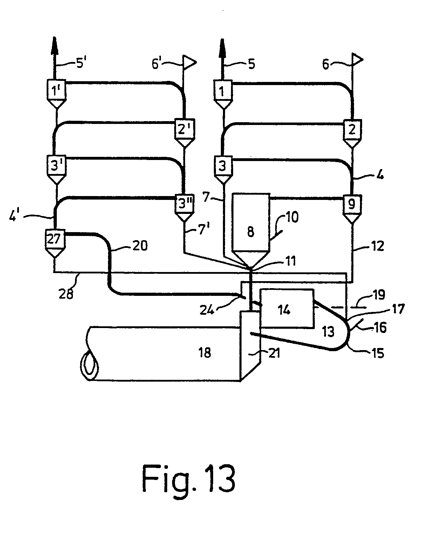

Figures 12 and 13 show corresponding two string apparatus with a calciner preheater string having cyclones 1, 2 and 3, gas inlet 4, gas outlet 5, material inlet 6 and outlet 7 and a sintering furnace preheater string having corresponding components marked with a prime.

Figure 12 shows a simple form of the two string embodiment, where the cold raw material is introduced and preheated in the preheaters, whereafter the preheated material is united and introduced and calcined in the calciner. The calcined material is then suspended in the suspension inlet duct 15, burned with fuel introduced through the fuel inlet 16 and/or 19, precipitated, agglomerated and sintered in the sintering drum 14 and air cooled in the air cooler 18.

The hot exit air from the cooler is divided into two parts. The first part being introduced in the suspension calciner, where it is used for burning the fuel introduced through the fuel inlet 10. The resulting combustion gas is, via the separating cyclone, directed to the calciner preheater. The second part of the exit air is introduced to the suspension inlet duct, where it is used for burning the fuel introduced through fuel inlet 16 and/or 19. The resulting combustion gas is via the sintering drum 14 directed to the sintering furnace preheater string.

Figure 13 shows a preferred embodiment of the two string system differing from the apparatus illustrated in Figure 12 in having an extra heat exchange for the calcined material. The calcined material is suspended in the exit gas from the sintering drum 14, the material is separated in a cyclone 27 with a gas outlet connected to the sintering furnace preheater string and a material outlet 28 connected to the material inlet of the suspension inlet duct 15.

In all cases the gas flow may be established by a (not shown) fan arranged at the outlet 5 for heating gas and the distribution of the flows of hot exit air from the cooler to suspension furnace and calciner respectively may be controlled by means of a valve arranged in the suspension inlet duct.

If desired the gas outlet duct 20 of the sintering furnace may be provided with a by-pass as in the rotary kiln technology.

Figures 14 and 15 show as a schematic side view direct substantially tangential inlets of the second end of the suspension inlet duct into a rotary drum 14 having an end flange 32 sealed with a sealing 31 to a stationary end wall 30 equipped with an opening 29 connected with the second end of the suspension inlet pipe. Figure 14 corresponds to a detail of the apparatus shown in Figure 1 where the combustion gas outlet duct 20 is situated at the opposite end of the sintering drum. Figure 15 corresponds to the apparatus shown in Figure 4 in which the combustion gas outlet duct is situated at the upper end of the sintering drum communicating with the drum via an opening 33 in the end wall 30 and shows a constriction member 14' provided as a thickening of the lining in the drum 14.

Figures 16 and 17 show as a schematic side view and a schematic front view, respectively, a suspension inlet duct 15 connected to a spiral flow chamber 22 with a tangential suspension inlet provided with a flange 35 sealed with a sealing 36 to a flange 37 on the upper end of the sintering drum 14, defining an axial suspension inlet opening 23. A peripheral part 34 of the end wall of the sintering drum is fixed to the drum.

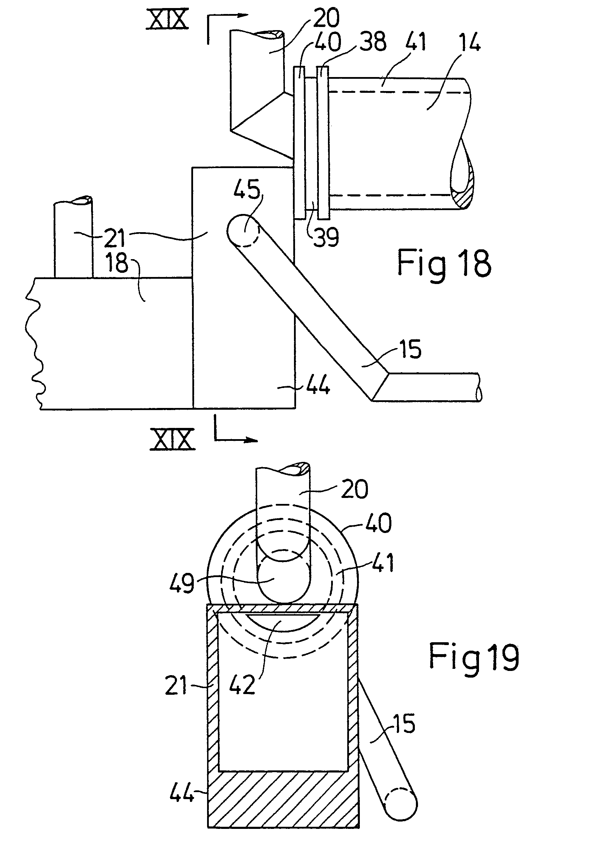

Figures 18, 20 and 22 show as a schematic side view, details of the material outlet end of the sintering drum. Figures 18, 20 and 22 correspond to Figures 1, 6, and 10, respectively. Figures 19, 21 and 23 show schematic sectional views taken along the lines XIX—XIX, XXI—XXI and XXIII—XXIII, in Figures 18, 20 and 22 respectively.

Figures 18 to 23 show the lower part of the sintering drum 14 provided with an inner lining 41 and a flange 38 sealed with a sealing 39 to a stationary end wall 40 fixed to the air outlet 21 of the cooler 18. The lower part of the end wall 40 is provided with an opening 42 defining the clinker outlet of the sintering drum and the clinker inlet of the cooler.

In Figures 18, 19, 22, and 23, the upper part of the end wall 40 is provided with a second opening 49 defining an exhaust gas exit communicating with the gas outlet duct 20.

In Figures 18 and 19 the cooler 18 is a grate cooler with double air outlets 21, the first situated at the top of the cooler communicating with the calciner, and the second being box shaped with sidewalls 44 one of which is provided with an opening 45 communicating with the first end of the suspension inlet duct 15.

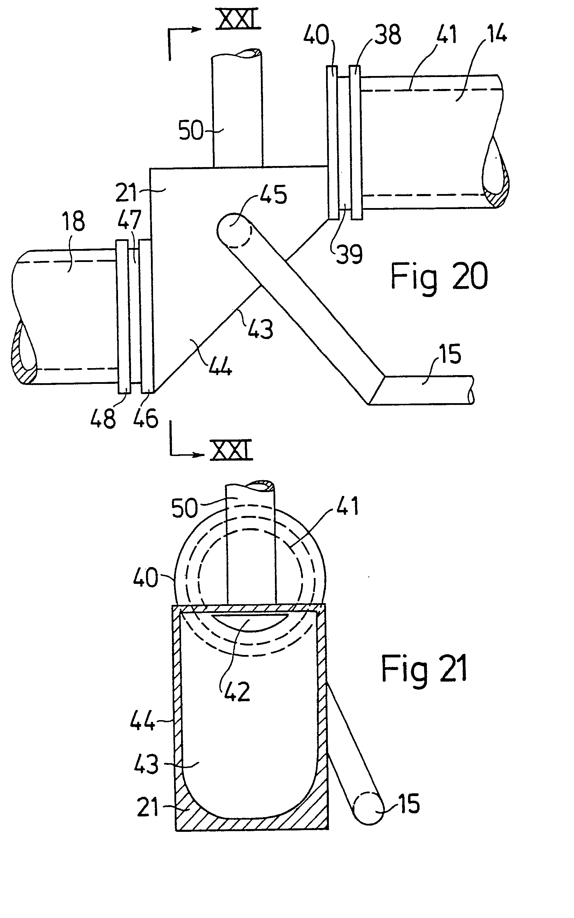

In Figures 20 to 23 the cooler 18 is a rotary drum cooler comprising a drum with an end flange 48 which by a sealing 47 is sealed to a flange 46 on an exit air hood defining the cooler air outlet 21. The exit air hood is provided with an inclined bottom plate 43 leading the clinker from the clinker outlet opening 42 to the cooler drum and with sidewalls 44 one of which is provided with an opening 45 communicating with the first end of the suspension inlet duct 15.

In Figures 20 and 21 the top of the exit air hood is provided with a duct 50 directed to the air inlet of the calciner.

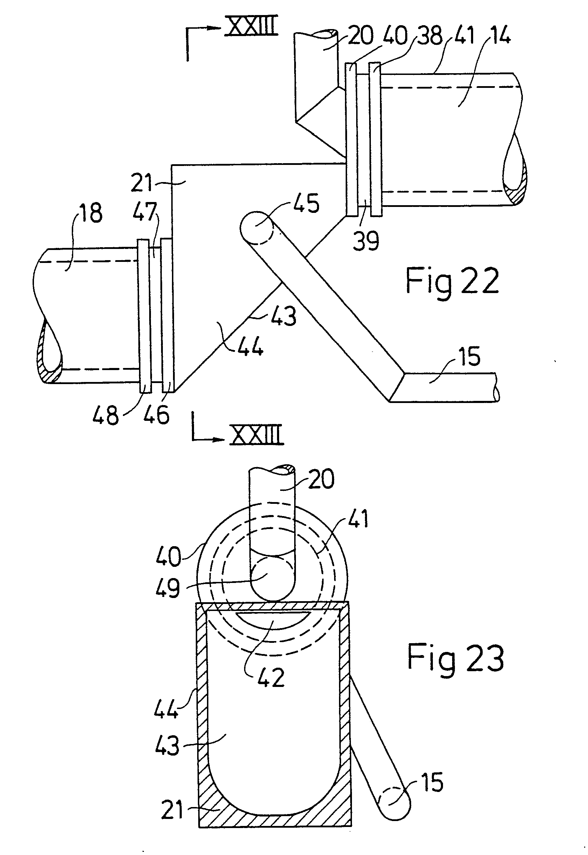

In Figures 22 and 23 the area of the clinker outlet opening 42 is greater than in Figures 20 and 21 permitting a part of the exit air from the cooler to pass to the calciner via the lower end of the sintering drum and the gas outlet duct 20.

## Claims

1. An apparatus for burning cement clinker comprising a preheater (1, 2, 3) with an inlet (4) and an outlet (5) for heating gas and an inlet (6) and an outlet (7) for pulverulent cement raw material; a suspension calciner (8, 9) with inlets (10, 11) for fuel, combustion air and preheated raw material, an outlet for combustion gas connected to the heating gas inlet (4) of the preheater, and an outlet (12) for calcined material communicating with a material inlet (17) of a sintering furnace (13) incorporating a cylindrical member (14) rotatable about an axis which is slightly inclined to the horizontal and providing a sintering drum, an inlet for fuel (16) and combustion air, an outlet (20) at one end of the drum for combustion gas communicating with the heating gas inlet of the preheater and an outlet at the lower end of the drum for the sintered product connected to a material inlet of an air cooler (18) for cooling the sintered product with an air outlet (21) connected to both the air inlet of the sintering furnace and the air inlet of the suspension calciner; characterised in that the sintering furnace comprises a suspension inlet duct (15) provided with a material inlet (17) and having a first end connected to the air outlet (21) of the cooler and a second end leading to a suspension inlet at the upper end of the drum in a plane substantially tangential to the inner circumferential surface of the drum whereby in use, material in suspension is introduced into the upper end of the drum with a tangential velocity component and thereby separated from the suspension; the fuel inlet or inlets (16, 19) leading into the suspension inlet of the drum (14) and/or into the suspension inlet duct (15).

2. An apparatus according to claim 1, characterised in that the sintering drum (14) is provided with a constriction (14') member situated at a distance from the suspension inlet constituting approximately one third of the total length of the sintering drum.

3. An apparatus according to claim 1 or claim 2, wherein the preheater is a single string multistage cyclone suspension preheater (1, 2, 3), characterised in that the sintering furnace combustion gas outlet (20) communicates with the heating gas inlet (4) of the preheater via the suspension calciner (8, 9).

4. An apparatus according to claim 3, characterised in that a sintering furnace combustion gas outlet duct (20) is provided with an inlet (7) for preheated material.

5. An apparatus according to claim 3, characterised in that a sintering furnace combustion gas duct (24) is provided with an inlet (12) for calcined material and a cyclone separator (25) defining a heat exchange unit for calcined material, the gas outlet (26) of the cyclone separator being connected to the air inlet (11) of the suspension calciner, and the material outlet of the cyclone separator being connected to the material inlet (17) of the sintering furnace.

6. An apparatus according to any one of claims 3 to 5, characterised in that the combustion gas outlet (20) is connected to the lower end of the sintering drum (14) and that the outlet for the sintered product, the lowest part of the sintering drum, and the combustion gas outlet provide the connection (21) between the air outlet of the cooler and the air inlet of the suspension calciner.

7. An apparatus according to claim 1 or claim 2, wherein the preheater is a two string multistage cyclone suspension preheater, each string being provided with separate material and heating gas inlets and outlets, the heating gas inlet of the calciner/sintering furnace string being connected to the combustion gas outlet of the suspension calciner/sintering furnace, respectively (Figure 13), characterized in that a sintering furnace combustion gas duct (24) is provided with an inlet for calcined material and a cyclone separator (27) defining a heat exchange unit for calcined material, a gas outlet of the cyclone separator being connected to the heating gas inlet (4') of the sintering furnace string.

8. An apparatus according to any one of the preceding claims, characterized in that the tangential relationship between the second end of the suspension inlet duct (15) and the upper end of the sintering drum is provided via a stationary cylindrical member (22) which is coaxial with and smaller in diameter than the sintering drum and which provides a spiral flow chamber with a tangential suspension inlet (15) and an axial suspension outlet (23) communicating with the sintering drum.

**Revendications**

1. Dispositif pour la cuisson de clinker, comprenant un préchauffeur (1, 2, 3) avec une admission (4) et une sortie (5) de gaz de chauffage et une admission (6) et une sortie (7) de la matière première pulvérulente pour la fabrication du ciment; une enceinte (8, 9) de calcination de la suspension, comportant des admissions (10, 11) du combustible, de l'air de combustion et de la matière première préchauffée, une sortie du gaz de combustion reliée à l'admission (4) du gaz de chauffage dans le préchauffeur, et une sortie (12) de la matière calcinée communicant avec une admission (17) de la matière dans un four (13) de frittage comportant un élément cylindrique (14) pouvant tourner autour d'un axe légèrement incliné sur l'horizontale et constituant un cylindre de frittage, une admission de combustible (16) et d'air de combustion, une sortie (20) à une extrémité du cylindre pour le gaz de combustion, communicant avec l'admission de gaz de chauffage dans le préchauffeur et une sortie, à l'extrémité inférieure du cylindre, pour le produit fritté, reliée à une admission de matière dans un refroidisseur (18) par air pour refroidir le produit fritté et qui comporte une sortie (21) d'air reliée à la fois à l'admission d'air dans le four de frittage et à l'admission d'air dans l'enceinte de calcination de la suspension, dispositif caractérisé en ce que le four de frittage comprend un conduit (15) d'admission de la suspension, comportant une admission (17) de la matière et ayant une première extrémité reliée à la sortie (21) d'air du refroidisseur et une seconde extrémité conduisant à une admission de la suspension à l'extrémité supérieure du cylindre dans un plan sensiblement tangentiel à la surface circonférentielle interne du cylindre, de manière qu'en service la matière en suspension soit introduite dans l'extrémité supérieure du cylindre en présentant une composante de vitesse tangentielle et soit ainsi séparée de la suspension; l'admission ou les admissions (16, 19) de combustible débouchant dans l'admission de la suspension dans le cylindre (14) et/ou dans le conduit (15) d'admission de la suspension.

2. Dispositif selon la revendication 1, caractérisé en ce que le cylindre (14) de frittage comporte un élément de constriction (14') situé à une distance de l'admission de la suspension représentant approximativement un tiers de la longueur totale du cylindre de frittage.

3. Dispositif selon la revendication 1 ou la revendication 2, dans lequel le préchauffeur est un préchauffeur (1, 2, 3) de suspension à un seul circuit de cyclones en plusieurs étages, dispositif caractérisé en ce que l'admission (20) du gaz de combustion dans le four de frittage communique avec l'admission (4) de gaz de chauffage dans le préchauffeur par l'intermédiaire de l'enceinte (8, 9) de calcination de la suspension.

4. Dispositif selon la revendication 3, caractérisé en ce qu'un conduit (20) de sortie de gaz de combustion du four de frittage comporte une admission (7) de matière préchauffée.

5. Dispositif selon la revendication 3, caractérisé en ce qu'un conduit (24) de gaz de combustion du four de frittage comporte une admission (12) de matière calcinée et un cyclone séparateur (25) constituant une unité d'échange de chaleur pour la matière calcinée, la sortie (26) de gaz du cyclone séparateur étant reliée à l'admission (11) d'air dans l'enceinte de calcination de la suspension, et la sortie de matière du cyclone séparateur étant reliée à l'admission (17) de la matière dans le four de frittage de la suspension.

6. Dispositif selon l'une quelconque des revendications 3 à 5, caractérisé en ce que la sortie (20) de gaz de combustion est reliée à l'extrémité inférieure du cylindre (14) de frittage et en ce que la sortie du produit fritté, la partie inférieure du cylindre de frittage, et la sortie de gaz de combustion constituent la liaison (21) entre la sortie d'air du refroidisseur et l'admission d'air dans l'enceinte de calcination de la suspension.

7. Dispositif selon la revendication 1 ou la revendication 2, dans lequel le préchauffeur est un préchauffeur de suspension à deux circuits de cyclones à plusieurs étages, chaque circuit comportant des admissions et sorties séparées de matière et de gaz de chauffage, l'admission de gaz de chauffage dans le circuit enceinte de calcination/four de frittage étant reliée à la sortie de gaz de combustion de l'enceinte de calcination de suspension/four de frittage, respectivement (figure 13), dispositif caractérisé en ce qu'un conduit (24) de gaz de combustion du four de frittage comporte une admission de matière calcinée et un cyclone séparateur (27) constituant une unité d'échange de chaleur pour la matière calcinée, une sortie de gaz du cyclone séparateur étant reliée à l'admission (4') de gaz de chauffage dans le circuit du four de frittage.

8. Dispositif selon l'une quelconque des revendications précédentes, caractérisé en ce que la relation de tangentialité entre la seconde extrémité du conduit (15) d'admission de la suspension et l'extrémité supérieure du cylindre de frittage est obtenue à l'aide d'un élément (22) cylindrique fixe qui a le même axe que le cylindre de frittage et présente un diamètre inférieur à celui de cylindre, et qui comporte une chambre à écoulement en spirale comportant une admission (15) tangentielle de la suspension et une sortie (23) axiale de la suspension communicant avec le cylindre de frittage.

**Patentansprüche**

1. Vorrichtung zum Brennen von Zementklinker mit einem Vorwärmer (1, 2, 3) mit einem Einlaß (4) und einem Auslaß (5) für Heizgas und einem Einlaß (6) und einem Auslaß (7) für pulverisiertes Zementrohmaterial, mit einem Suspensionskalzinator (8, 9) mit Einlässen (10, 11) für Brennstoff, Verbrennungsluft und vorerwärmtes Rohmaterial, einem Auslaß für Verbrennungsgas angeschlossen an den Heizgaseinlaß (4) des Vorwärmers und mit einem Auslaß (12) für kalziniertes Material in Verbindung stehend mit einem Materialeinlaß (17) eines Sinterungsofens (13), der über ein zylindrisches Teil (14) verfügt, das um eine leicht zur Horizontalen geneigte Achse drehbar ist und eine Sinterungstrommel bildet, einem Einlaß für Brennstoff (16) und Verbrennungsluft, einem Auslaß (20) am einen Ende der Trommel für Verbrennungsgas in Verbindung stehend mit dem Heizgaseinlaß des Vorwärmers und einem Auslaß am unteren Ende der Trommel für das gesinterte Produkt angeschlossen an einen Materialeinlaß eines Luftkühlers (18) zum Kühlen des gesinterten Produkts mit einem Luftauslaß (21) angeschlossen sowohl an den Lufteinlaß des Sinterungsofens als auch an den Lufteinlaß des Suspensionskalzinators, dadurch gekennzeichnet, daß der Sinterungsofen einen Suspensionseinlaßkanal (15) aufweist, der mit einem Materialeinlaß (17) und einem ersten Ende angeschlossen an den Luftauslaß (21) des Kühlers und einem zweiten Ende ausgestattet ist, das zu einem Suspensionseinlaß am oberen Ende der Trommel in einer Ebene im wesentlichen tangential zur inneren Umfangsfläche der Trommel führt, wodurch beim Betrieb Material in Suspension in das obere Ende der Trommel mit einer tangentialen Geschwindigkeitskomponente und dadurch aus der Suspension abgeschieden eingeführt wird, wobei der Brennstoffeinlaß oder die Brennstoffeinlässe (16, 19) in den Suspensionseinlaß der Trommel (14) und/oder in den Suspensionseinlaßkanal (15) führen.

2. Vorrichtung nach Anspruch 1, dadurch gekennzeichnet, daß die Sinterungstrommel (14) mit einem Einschnürungsteil (14') ausgestattet ist, das in einem Abstand von dem Suspensionseinlaß angeordnet ist, der etwa ein Drittel der Gesamtlänge der Sinterungstrommel bildet.

3. Vorrichtung nach Anspruch 1 oder Anspruch 2, wobei der Vorwärmer ein mehrstufiger Einstrang-Zyklonsuspensionsvorwärmer (1, 2, 3) ist, dadurch gekennzeichnet, daß der Verbrennungsgasauslaß (20) des Sinterungsofens mit dem Heizgaseinlaß (4) des Vorwärmers über den Suspensionskalzinator (8, 9) in Verbindung steht.

4. Vorrichtung nach Anspruch 3, dadurch gekennzeichnet, daß ein Verbrennungsgasauslaßkanal (20) des Sinterungsofens mit einem Einlaß (7) für vorerwärmtes Material ausgestattet ist.

5. Vorrichtung nach Anspruch 3, dadurch gekennzeichnet, daß ein Verbrennungsgaskanal (24) des Sinterungsofens mit einem Einlaß (12) für kalziniertes Material und einem Zyklonabscheider (25) ausgestattet ist, der eine Wärmetauscheinheit für kalziniertes Material bildet, wobei der Gasauslaß (26) des Zyklonabscheiders an den Lufteinlaß (11) des Suspensionskalzinators angeschlossen ist und der Materialauslaß des Zyklonabscheiders an den Materialeinlaß (17) des sinterungsofens angeschlossen ist.

6. Vorrichtung nach einem der Ansprüche 3 bis 5, dadurch gekennzeichnet, daß der Verbrennungsgasauslaß (20) am unteren Ende der Sinterungstrommel (14) angeschlossen ist und daß der Auslaß für das gesinterte Produkt, der unterste Teil der Sinterungstrommel, und der Verbrennungsgasauslaß die Verbindung (21) zwischen dem Luftauslaß des Kühlers und dem Lufteinlaß des Suspensionskalzinators bilden.

7. Vorrichtung nach Anspruch 1 oder Anspruch 2, wobei der Vorwärmer ein mehrstufiger Zweistrang-Zyklonsuspensionsvorwärmer ist, dessen jeder Strang mit separaten Einlässen und Auslässen für Material und Heizgas ausgestattet ist, wobei der Heizgaseinlaß des Kalzinator/Sinterungsofen-Strangs mit dem Verbrennungsgasauslaß des Suspensionskalzinators/Sinterungsofens in Verbindung steht (Fig. 13), dadurch gekennzeichnet, daß ein Verbrennungsgaskanal (24) des Sinterungsofens mit einem Einlaß für kalziniertes Material und einem Zyklonabscheider (27) ausgestattet ist, der eine Wärmetauscheinheit für kalziniertes Material bildet, wobei ein Gasauslaß des Zyklonabscheiders an den Heizgaseinlaß (4') des Sinterungsofenstrangs angeschlossen ist.

8. Vorrichtung nach irgendeinem der vorhergehenden Ansprüche, dadurch gekennzeichnet, daß die tangentiale Beziehung zwischen dem zweiten Ende des Suspensionseinlaßkanals (15) und dem oberen Ende der Sinterungstrommel über ein stationäres Zylinderteil (22) verläuft, das koaxial zu der Sinterungstrommel angeordnet und im Durchmesser kleiner als diese ist und das eine Spiralstromkammer mit einem tangentialen Suspensionseinlaß (15) und einem axialen Suspensionsauslaß (23) bildet, der mit der Sinterungstrommel in Verbindung steht.

Fig.1

Fig.2

Fig. 3

Fig. 4

Fig.5

Fig.6

Fig. 7

Fig. 8

Fig.9

Fig.10

Fig.11

Fig.12

Fig. 13

Fig.14

Fig.15

Fig 17

Fig 16

XIX

20
40  38  41  14

45

21
18

39

Fig 18

15

44

XIX

20

40

49  41

21

42

Fig 19

15

44

Fig 20

Fig 21

XXIII

20 40 38 41 14

21

18 47

45

39

Fig 22

43

44

48 46

15

XXIII

20

41

40

49

42

Fig 23

44

43

21

15